# EUROPEAN PATENT SPECIFICATION

(11) **EP 3 045 663 B1**
(45) Date of publication and mention of the grant of the patent: **12.09.2018**
(21) Application number: 16151972.3
(22) Date of filing: 19.01.2016
(51) Int. Cl.: F01D 5/14, F01D 5/34, F01D 5/06

(54) **INTEGRALLY BLADED FAN ROTOR WITH PRESSURE SIDE THICKNESS ON BLADE TRAING EDGE**
INTEGRAL BESCHAUFELTER GEBLÄSEROTOR MIT DRUCKSEITENDICKE AUF SCHAUFELABSTRÖMKANTE
ROTOR DE SOUFFLANTE À AUBAGE INTEGRAL AVEC ÉPAISSEUR CÔTÉ PRESSION SUR LE BORD ARRIÈRE

(30) Priority: 19.01.2015 US 201514599662
(43) Date of publication of application: 20.07.2016
(73) Proprietor: United Technologies Corporation, Farmington, CT 06032 (US)
(72) Inventor: FINK, Evan K., Cromwell, CT 06416 (US); STEELE, Joseph, Middletown, CT 06457 (US)
(74) Representative: Dehns

(56) References cited:
- EP-A2- 1 199 439
- US-A1- 2007 258 819
- US-A1- 2014 044 551

## Description

### BACKGROUND OF THE INVENTION

This application relates to an integrally bladed rotor wherein the thickness of a blade is locally increased at a radially inner span and at the trailing edge.

Gas turbine engines are known and, typically, include a fan delivering air into a compressor. The air is compressed and delivered into a combustion section where it is mixed with fuel and ignited. Products of this combustion pass downstream over turbine rotors, causing them to rotate.

One recent development is an integrally bladed rotor utilized as a fan rotor. An integrally bladed rotor can generally be described as a fan rotor having a hub with a plurality of blades formed integrally with the hub, and extending radially outwardly of the hub. As known, the fan blades define an airfoil shape with a pressure side, a suction side, and extending between a leading edge and a trailing edge.

As known generally, a fillet, or curved portion, merges the airfoil into the hub over a relatively small portion of the radial extent of the airfoil, also known as its span.

Some prior art integrally bladed rotors have a problem with surge, which is an undesirable aerodynamic effect that may be experienced by a fan rotor. Surging is essentially an unstable airflow which can have a detrimental effect on the operation of the fan.

US 2014/044551 relates to a blade cascade. EP 1 199 439 relates to a rotor
assembly.

### SUMMARY OF THE INVENTION

In an embodiment, an integrally bladed fan rotor comprises a hub centered about an axis and having a plurality of blades extending radially outwardly of the axis across a span. Each of the blades includes an airfoil extending between a leading edge and a trailing edge, and having a pressure side and a suction side. The airfoil has a thicker portion at the trailing edge, and at a radially inner portion of the span, and over a limited percentage of the span, such that the thicker portion does not extend beyond 50 percent of the span. An axial distance is defined between the trailing edge and the leading edge. The thicker portion extends for less than 50 percent of the axial distance, and is on the pressure side.

In another embodiment according to the previous embodiment, an increased thickness of the thicker portion area becomes greater in a direction moving from a radially outermost end of the end toward the hub.

In another embodiment according to any of the previous embodiments, the thickness increases by greater than 100 percent of a thickness of that at the radially outermost end to a portion of the thicker portion which merges into the hub.

In another embodiment according to any of the previous embodiments, a fillet merges the airfoil into the hub at locations along the axial distance and spaced toward the leading edge from the increased thickness portion.

In another embodiment according to any of the previous embodiments, the thicker portion also has a fillet merging the thicker portion into the hub.

In another embodiment according to any of the previous embodiments, a ratio of the thickness of the thicker portion at a radially innermost end to a diameter of an outer periphery of the hub is less than .025.

In another embodiment according to any of the previous embodiments, the thicker portion extends radially outwardly for less than 40 percent of the span.

In another embodiment according to any of the previous embodiments, the thicker portion extends for less than 40 percent of the axial distance.

In another embodiment according to any of the previous embodiments, a ratio of the thickness of the thicker portion at a radially innermost end to a diameter of an outer periphery of the hub is less than .025.

In another embodiment according to any of the previous embodiments, the thicker portion extends radially outwardly for less than 40 percent of the span.

In another embodiment according to any of the previous embodiments, the thicker portion extends for less than 40 percent of the axial distance.

In another featured embodiment, a gas turbine engine comprises a fan, a compressor rotor, a combustor and a turbine section. The fan is formed by an integrally bladed rotor including a hub centered about an axis and has a plurality of blades extending radially outwardly of the axis for a span. Each of the blades includes an airfoil extending between a leading edge and a trailing edge, and having a pressure side and a suction side. The airfoil has a thicker portion at the trailing edge, and at a radially inner portion of the span, and over a limited percentage of the span, such that the thicker portion does not extend beyond 50 percent of the span. An axial distance is defined between the trailing edge and the leading edge. The thicker portion extends for less than 50 percent of the axial distance, is on the pressure side.

In another embodiment according to previous embodiment, an increased thickness of the thicker portion area becomes greater in a direction moving from a radially outermost end of the end toward the hub.

In another embodiment according to any of the previous embodiments, a fillet merges the airfoil into the hub at locations along the axial distance and spaced toward the leading edge from the increased thickness portion.

In another embodiment according to any of the previous embodiments, the thicker portion also has a fillet merging the thicker portion into the hub.

In another embodiment according to any of the previous embodiments, a ratio of the thickness of the thicker portion at a radially innermost end to a diameter of an outer periphery of the hub is less than .025.

In another embodiment according to any of the previous embodiments, the thicker portion extends radially outwardly for less than 40 percent of the span.

In another embodiment according to any of the previous embodiments, the thicker portion extends for less than 40 percent of the axial distance.

In another embodiment according to any of the previous embodiments, the thicker portion extends radially outwardly for less than 40 percent of the span.

In another embodiment according to any of the previous embodiments, the thicker portion extends for less than 40 percent of the axial distance.

These and other features may be best understood from the following drawings and specification.

### BRIEF DESCRIPTION OF THE DRAWINGS

Figure 1 schematically shows a gas turbine engine.
Figure 2 shows an integrally bladed rotor.
Figure 3A shows a blade on an integrally bladed rotor.
Figure 3B shows the blade from another perspective.
Figure 4 graphically shows a thickness increase to the airfoil of the blade in the integrally bladed rotor.

### DETAILED DESCRIPTION

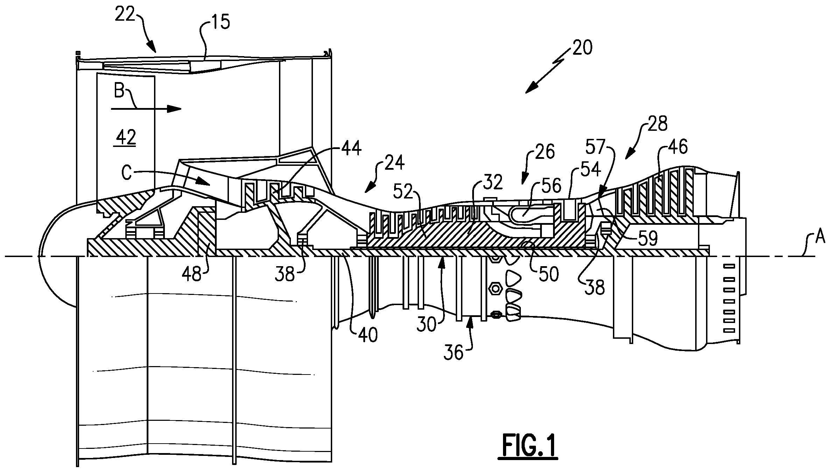

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

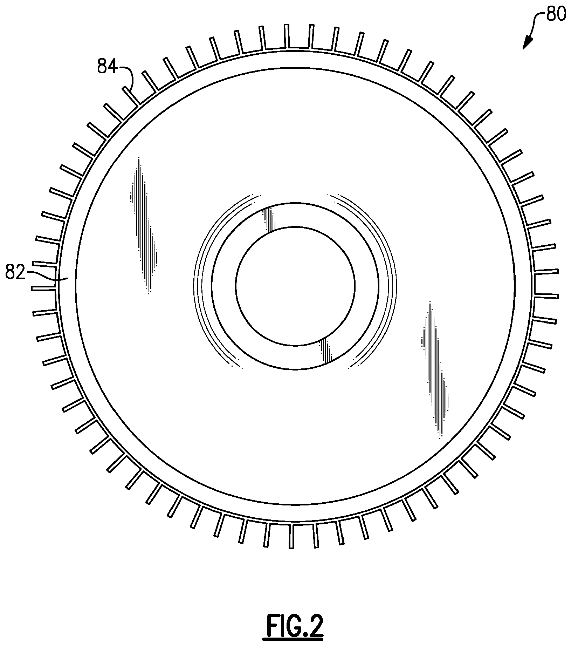

Figure 2 shows an integrally bladed rotor 80 which may be utilized as a fan rotor in the engine of Figure 1. The integrally bladed rotor 80 includes a hub 82 with a plurality of blades 84 defined by an airfoil extending radially outwardly of the hub 82.

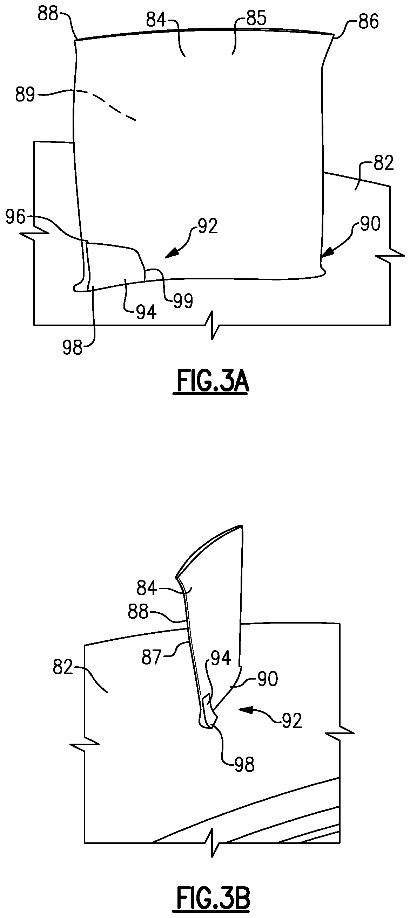

Figure 3A shows a blade 84 having a pressure side 85. As shown, pressure side 85 extends from a leading edge 86 to a trailing edge 88. A suction side 89 is on the opposed face. A fillet 90 merges the blade 84 into the hub 82. The fillet 90 extends for a percentage of an overall span, or radial extent, of the airfoil defining the blade 84 of less than 6 percent.

A modified portion 92 of the airfoil defining the blade 84 is formed adjacent or at the trailing edge 88. The portion 92 includes an increased airfoil thickness portion 94 extending radially outwardly to a radially outward most point 96. Point 96 is preferably at less than 50 percent of the span of the airfoil of the blade 84. More narrowly, it is less than 40 percent and, in one embodiment, it is approximately 30 percent.

Modified portion 92 also includes a fillet 98 formed at the radially inner end of the thicker portion 94 to merge the thicker portion 94 into the hub 82. As shown, the thicker portion 94 extends for only a small portion of an axial distance between the trailing edge 88 and the leading edge 86 to a forwardmost point 99. In embodiments, the thicker portion 94 extends for less than 50 percent of the distance and for less than 40 percent of the distance. In one embodiment, it extended for 30 percent of this distance.

Figure 3B is another perspective and shows the modified portion 92 extending outwardly of the blade 84.

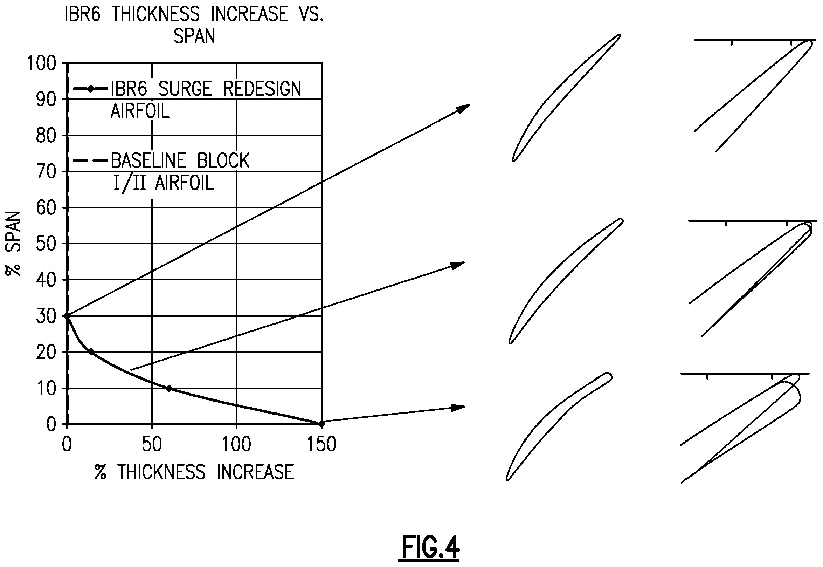

Figure 4 graphically shows the thicker portion 94 graphing a thickness increase compared to a span location. If the span location at the top point 96 is taken as a nominal thickness increase, by a zero percent span, the thickness increases of thicker portion 94 can be on the order of 150 percent increase.

The increased thickness of the thicker portion becomes greater, as can be appreciated from Figure 4, in a direction moving from the radially outermost, or top point, 96 and radially inwardly towards the hub 82.

Of course, the blade 84 can be seen to be relatively thin and, thus, the total increase may be less than 0.05 inch (0.127 centimetres), for an integrally bladed rotor having a diameter to an outer surface of the hub 82 of 14 inches (35.56 centimetres). In one embodiment, the 150 percent thickness increase was approximately 0.021 inch (0.053 centimeters). In embodiments, the thickness increases by at least 100%. The increase as a percentage compares the increase to a nominal thickness of the airfoil at point 96.

Thus, as is clear, the thickness increases by greater than 100% between the radially outermost end, or the top point 96, and to a portion of the thicker portion 94 which merges into the hub 82. A ratio of the thickness of the thicker portion at a radially innermost end to a diameter of the hub 82 is less than .025.

With the modified portion 92, the occurrence of a surge is dramatically reduced. On the other hand, the additional material is limited both in span and in the axial length and, thus, unnecessary weight is not added.

Although an embodiment of this invention has been disclosed, a worker of ordinary skill in this art would recognize that certain modifications would come within the scope of this invention. For that reason, the following claims should be studied to determine the true scope and content of this invention.

## Claims

1. An integrally bladed fan rotor (80) comprising a hub (82) centered about an axis and having a plurality of blades (84) extending radially outwardly of said axis across a span, each of said blades (84) including an airfoil extending between a leading edge (86) and a trailing edge (88), and having a pressure side (85) and a suction side (89), said airfoil having a thicker portion (94) at said trailing edge (88), at a radially inner portion of said span, and over a limited percentage of said span, such that said thicker portion (94) does not extend beyond 50 percent of said span, an axial distance being defined between said trailing edge (88) and said leading edge (86), said thicker portion (94) extending for less than 50 percent of said axial distance, and said thicker portion (94) being on said pressure side (85).

2. The integrally bladed fan rotor (80) as set forth in claim 1, wherein an increased thickness of said thicker portion (94) area becomes greater in a direction moving from a radially outermost end of said airfoil toward said hub (82).

3. The integrally bladed fan rotor (80) as set forth in claim 2, wherein the thickness increases by greater than 100 percent of a thickness of that at said radially outermost end to a portion of said thicker portion (94) which merges into said hub (82).

4. The integrally bladed fan rotor (80) as set forth in claim 1, 2 or 3, wherein a fillet (90) merges the airfoil into said hub (82) at locations along said axial distance and spaced toward said leading edge (86) from said thicker portion (94).

5. The integrally bladed fan rotor (80) as set forth in claim 4, wherein said thicker portion (94) also has a fillet (90) merging said thicker portion (94) into said hub (82).

6. The integrally bladed fan rotor (80) as set forth in any preceding claim, wherein a ratio of said thickness of said thicker portion (94) at a radially innermost end to a diameter of an outer periphery of said hub (82) is less than .025.

7. The integrally bladed fan rotor (80) as set forth in any preceding claim, wherein said thicker portion (94) extends radially outwardly for less than 40 percent of said span.

8. The integrally bladed fan rotor (80) as set forth in any preceding claim, wherein said thicker portion (94) extends for less than 40 percent of said axial distance.

9. A gas turbine engine (20) comprising a fan (42), a compressor rotor, a combustor (56) and a turbine section (28), with said fan (42) formed by an integrally bladed fan rotor (80) as recited in any preceding claim.

## Patentansprüche

1. Integral beschaufelter Gebläserotor (80), der eine um eine Achse zentrierte Rotornabe (82) umfasst und eine Vielzahl von Schaufeln (84) aufweist, die sich radial auswärts von der Achse über eine Spannweite erstrecken, wobei jede der Schaufeln (84) ein Schaufelprofil beinhaltet, das sich zwischen einer Anströmkante (86) und einer Abströmkante (88) erstreckt, und eine Druckseite (85) und eine Saugseite (89) aufweist, wobei das Schaufelprofil einen dickeren Abschnitt (94) an der Abströmkante (88), an einem radial innen gelegenen Abschnitt der Spannweite und über einen eingeschränkten Prozentsatz der Spannweite aufweist, sodass der dickere Abschnitt (94) 50 Prozent der Spannweite nicht überschreitet, wobei ein axialer Abstand zwischen der Abströmkante (88) und der Anströmkante (86) definiert ist, der dickere Abschnitt (94) sich über weniger als 50 Prozent des axialen Abstands erstreckt und der dickere Abschnitt (94) sich auf der Druckseite (85) befindet.

2. Integral beschaufelter Gebläserotor (80) nach Anspruch 1, wobei eine erhöhte Dicke des Bereichs des dickeren Abschnitts (94) in einer Richtung, die sich von einem radial äußersten Ende des Schaufelprofils in Richtung der Nabe (82) erstreckt, zunimmt.

3. Integral beschaufelter Gebläserotor (80) nach Anspruch 2, wobei die Dicke um mehr als 100 Prozent einer Dicke derjenigen am radial äußersten Ende zu einem Abschnitt des dickeren Abschnitts (94), der mit der Nabe (82) zusammengefügt ist, zunimmt.

4. Integral beschaufelter Gebläserotor (80) nach Anspruch 1, 2 oder 3, wobei eine Ausrundung (90) das Schaufelprofil mit der Nabe (82) an Positionen entlang des axialen Abstands und in Richtung der Anströmkante (86) vom dickeren Abschnitt (94) beabstandet zusammenfügt.

5. Integral beschaufelter Gebläserotor (80) nach Anspruch 4, wobei der dickere Abschnitt (94) ebenfalls eine Ausrundung (90) aufweist, die den dickeren Abschnitt (94) mit der Nabe (82) zusammenfügt.

6. Integral beschaufelter Gebläserotor (80) nach einem der vorhergehenden Ansprüche, wobei ein Verhältnis der Dicke des dickeren Abschnitts (94) an einem radial innersten Ende zu einem Durchmesser eines äußeren Umfangs der Nabe (82) weniger als 0,025 beträgt.

7. Integral beschaufelter Gebläserotor (80) nach einem der vorhergehenden Ansprüche, wobei der dickere Abschnitt (94) sich über weniger als 40 Prozent der Spannweite radial auswärts erstreckt.

8. Integral beschaufelter Gebläserotor (80) nach einem der vorhergehenden Ansprüche, wobei der dickere Abschnitt (94) sich über weniger als 40 Prozent des axialen Abstands erstreckt.

9. Gasturbinentriebwerk (20), das ein Gebläse (42), einen Verdichterrotor, eine Brennkammer (56) und einen Turbinenabschnitt (28) umfasst, wobei das Gebläse (42) durch einen integral beschaufelten Gebläserotor (80) nach einem der vorhergehenden Ansprüche gebildet ist.

## Revendications

1. Rotor de soufflante à aubage intégral (80) comprenant un moyeu (82) centré autour d'un axe et ayant une pluralité d'aubes (84) s'étendant radialement vers l'extérieur dudit axe sur une étendue, chacune desdites aubes (84) comprenant un profil aérodynamique s'étendant entre un bord d'attaque (86) et un bord de fuite (88), et ayant un côté pression (85) et un côté aspiration (89), ledit profil aérodynamique ayant une portion plus épaisse (94) au niveau dudit bord de fuite (88), au niveau d'une portion radialement intérieure de ladite étendue, et sur un pourcentage limité de ladite étendue, de sorte que ladite portion plus épaisse (94) ne s'étend pas au-delà de 50 pour cent de ladite étendue, une distance axiale étant définie entre ledit bord de fuite (88) et ledit bord d'attaque (86), ladite portion plus épaisse (94) s'étendant pour moins de 50 pour cent de ladite distance axiale, et ladite portion plus épaisse (94) étant sur ledit côté pression (85).

2. Rotor de soufflante à aubage intégral (80) selon la revendication 1, dans lequel une épaisseur accrue de ladite zone de portion plus épaisse (94) devient plus grande dans une direction se déplaçant d'une extrémité radialement la plus extérieure dudit profil aérodynamique vers ledit moyeu (82).

3. Rotor de soufflante à aubage intégral (80) selon la revendication 2, dans lequel l'épaisseur augmente de plus de 100 pour cent d'une épaisseur de celle au niveau de ladite extrémité radialement la plus extérieure à une portion de ladite portion plus épaisse (94) qui fusionne avec ledit moyeu (82).

4. Rotor de soufflante à aubage intégral (80) selon la revendication 1, 2 ou 3, dans lequel un filet (90) fusionne le profil aérodynamique avec ledit moyeu (82) à des endroits le long de ladite distance axiale et espacé vers ledit bord d'attaque (86) de ladite portion plus épaisse (94).

5. Rotor de soufflante à aubage intégral (80) selon la revendication 4, dans lequel ladite portion plus épaisse (94) a aussi un filet (90) fusionnant ladite portion plus épaisse (94) avec ledit moyeu (82).

6. Rotor de soufflante à aubage intégral (80) selon une quelconque revendication précédente, dans lequel un rapport entre ladite épaisseur de ladite portion plus épaisse (94) au niveau d'une extrémité radialement la plus intérieure et un diamètre d'une périphérie extérieure dudit moyeu (82) est inférieur à 0,025.

7. Rotor de soufflante à aubage intégral (80) selon une quelconque revendication précédente, dans lequel ladite portion plus épaisse (94) s'étend radialement vers l'extérieur pour moins de 40 pour cent de ladite étendue.

8. Rotor de soufflante à aubage intégral (80) selon une quelconque revendication précédente, dans lequel ladite portion plus épaisse (94) s'étend pour moins de 40 pour cent de ladite distance axiale.

9. Moteur à turbine à gaz (20) comprenant une soufflante (42), un rotor de compresseur, une chambre de combustion (56), une section turbine (28), avec ladite soufflante (42) formée par un rotor de soufflante à aubage intégral (80) selon une quelconque revendication précédente.
